# EUROPEAN PATENT APPLICATION

(11) **EP 4 737 089 A1**
(43) Date of publication of application: **06.05.2026**
(21) Application number: 25212777.4
(22) Date of filing: 31.10.2025
(51) Int. Cl.: B29C 33/30, B29C 33/40, B29C 51/30, B29C 51/08

(54) **A MOLDING SYSTEM WITH SUCTION HEADS**

(30) Priority: 31.10.2024 LU 103437
(71) Applicant: Kurvatur A/S, 6100 Haderslev (DK)
(72) Inventor: Raun, Christian, 7120 Vejle (DK)
(74) Representative: Valet Patent Services Limited

(57) **Abstract**

There is provided a molding system for molding a three-dimensional object, comprising: an array of actuation members; suction heads provided on the actuation members of the array of actuation members; a flexible mat support on the suction heads of the array of actuation members, wherein the suction heads are configured to connect to the flexible mat support by vacuum, and wherein the actuation members are individually length adjustable to define a curvature of the flexible mat support to provide a curved base for molding a three-dimensional object.

## Description

### TECHNICAL FIELD

The present disclosure generally relates to molding systems and methods for molding three-dimensional objects.

### BACKGROUND

Molding is commonly used in the manufacturing industry to produce three-dimensional objects. It typically involves some form of surface (mold surface/blank) upon which the object to be molded is formed against. Mold material is typically heated and formed against the mold surface/blank, replicating the shape of the mold surface/blank in the mold material.

Traditional molding techniques often involve complex and time-consuming processes, leading to inefficiencies and limitations in design flexibility. In particular, forming the mold surface/blank can involve significant time and use large amounts of material. Therefore, molding is typically only used in the manufacturing of objects where large number of identical objects need to be produced, otherwise the process is cost/time-prohibitive.

WO2017153319A1 discloses an apparatus for making a three-dimensionally curved object. The apparatus comprises a membrane having a moulding surface, which is configurable into a predetermined shape by individually adjusting an array of actuators acting on the surface opposite the moulding surface of said membrane. The membrane is a ferromagnetic membrane and the actuators are provided with magnetic joints at the distal ends of said actuators. In some instances, the magnetic interaction of the actuators and the ferromagnetic membrane can cause wrinkles or other deformities in the moulding surface of the membrane.

Accordingly, it is desirable to provide molding systems and methods which are particularly suited to improve the molding process by improving efficiency of manufacturing low-volume, custom curved items. Further, the quality of moulding should be ensured and improved. Yet further, it would be desirable ensure uniform heating of the material to be moulded. Other desirable features and characteristics of the present disclosure will become apparent from the subsequent detailed description and the appended claims, taken in conjunction with the accompanying drawings and the foregoing technical field and background.

### SUMMARY

In a first aspect, there is provided a molding system for molding a three-dimensional object. The molding system comprises an array of actuation members. Suction heads may be provided on the actuation members of the array of actuation members. A flexible mat support may be provided on the suction heads of the array of actuation members. The suction heads may be configured to connect to the flexible mat support by vacuum. The actuation members may be individually length adjustable to define a curvature of the flexible mat support to provide a curved base for molding a three-dimensional object.

Due to the use of a vacuum connection between the suction heads and the flexible mat support, the two elements may slidably move relative to each other, even when connected. Accordingly, the flexible mat support may be arranged in more intricate three-dimensional shapes without causing unforeseen shapes in the flexible mat support. For example, due to the limited slip, wrinkles in the flexible mat support may be reduced.

The molding system may comprise pivotable joints between the suction heads and the actuation members.

The pivotable joints may comprise a lower joint that is rotatable relative to the actuation member and an upper joint that is connected to the lower joint about a pivot axis.

The suction heads may be configured to be slidable relative to the flexible mat support when connected thereto.

The suction heads may be in the form of suction cups.

The suction cups may comprise a central cup area and an outer skirt extending about the central cup area. The central cup area may optionally be made of a harder material than the outer skirt.

The molding system may comprise a vacuum network to connect the suction heads to the flexible mat by vacuum.

The vacuum network may comprise flexible vacuum hoses and vacuum connectors for connecting the flexible vacuum hoses to the suction heads.

Optionally, first and second types of the vacuum connectors are provided that extend from the suction heads in different directions to provide for different connection angles for the flexible vacuum hoses.

The molding system may comprise a heating mat supported on the flexible mat support for heating material to be molded to form the three dimensional object.

A heating area of the mat may be arranged in a rectangle.

Optionally, terminations of the heating elements are provided on a shorter side of the rectangle.

The heating elements may extend along adjacent parallel lines.

The lines may be spaced by a length of between 1 mm and 100 mm, preferably 5 mm and 50 mm and preferably 5 mm to 20 mm.

Optionally, all heating elements of the heating mat are provided on a single electric circuit.

In a second aspect, there is provided a method of molding a three-dimensional object. The method comprises providing any of the molding systems described herein. The method may comprise supporting molding material on the flexible mat. The method may comprise vacuum connecting the flexible mat to the suction heads. The method may comprise individually adjusting lengths of the actuation members by a control system to define a curvature of the flexible mat. The method may comprise molding the molding material to assume the curvature defined by the flexible mat.

Optionally, the method may comprise vacuum connecting the flexible mat to the suction heads by operation of a vacuum network.

Further aspects of the disclosure are described herein and presented in the claims.

### BRIEF DESCRIPTION OF THE DRAWINGS

The exemplary embodiments will hereinafter be described in conjunction with the following drawing figures, wherein like numerals denote like elements, and wherein:
FIG. 1 illustrates a molding system for molding three-dimensional objects;
FIG. 2 illustrates another molding system for molding three-dimensional objects;
FIGS. 3A and 3B show an array of actuation members and a flexible mat support of the molding system of FIGS. 1 and 2;
FIG. 4 shows a detailed view of a suction head of an actuation member;
FIG. 5 shows a detailed view of another suction head of an actuation member;
FIG. 6 shows a detailed view of suction heads connected to the flexible mat support;
FIG. 7 shows a partial view of the flexible mat support; and
FIG. 8 shows a plan view of a heating mat.

### DETAILED DESCRIPTION

The following detailed description is merely exemplary in nature and is not intended to limit the application and uses. Furthermore, there is no intention to be bound by any expressed or implied theory presented in the preceding technical field, background, brief summary or the following detailed description.

Embodiments of the present disclosure may be described herein in terms of functional and/or logical block components and various processing steps. It should be appreciated that such block components may be realized by any number of hardware, software, and/or firmware components configured to perform the specified functions. For example, an embodiment of the present disclosure may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments of the present disclosure may be practiced in conjunction with any number of systems, and that the systems described herein is merely exemplary embodiments of the present disclosure.

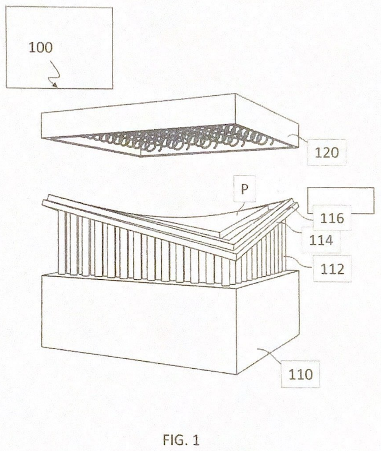

FIG. 1 shows a molding system 100. The molding system 100 is configured to provide a mold for stock material so that the stock material can be shaped in a three-dimensional manner. Molding typically involves heating the stock material so that it becomes malleable. Once heated sufficiently, it is formed against the mold and allowed to cool, thereby setting the material in the molded shape.

In the molding system 100 of FIG. 1, heating of the stock material to produce a heated panel P is performed at the same time as molding by the mold 110. The mold 110 forms a lower base supporting the heated panel P and a heater 120 is positioned above the mold 110. The heater 120 heats the stock material / heated panel P whilst it is supported by the lower base. This results in the heated panel P taking the three-dimensional shape of the lower base (as defined by the mold 110).

The mold 110 is configured to define the shape of the lower base which supports the heated panel P.

The mold 110 comprises an array of actuation members 112. The actuation members 112 can vary in length (height) relative to a bottom of the mold 110 so as to define the three-dimensional shape of the lower base upon which the stock material / heated panel P is supported on. The length of each actuation member 112 may be varied using corresponding actuators (not shown). The actuation members 112 may be formed such that each actuation member 112 is spaced-apart by a regular amount. In other examples, the actuation members 112 may be formed such that they are non-uniformly distributed. Further details of the actuation members 112 are provided below.

A flexible mat support 114 is placed on the array of actuation members 112. As detailed below, the flexible mat support 114 is selectively retained in contact with the array of actuation members 112 via vacuum. The three-dimensional shape of the flexible mat support 114 corresponds to the arrangement of the array of actuation members 112. The lengths of each of the actuation members 112 defines the shape of the flexible mat support 114 placed thereon.

A heating mat 116 is placed on the flexible mat support 114. The heating mat 116 lies generally flush on the flexible mat support 114. The heating mat 116 takes the shape of the flexible mat support 114 (which in turn is defined by the lengths of the actuation members 112).

As detailed below, the heating mat 116 has heating elements which assist in heating the stock material / heated panel P.

Optionally, the mold 110 also includes an upper sheet (not shown) which is acted upon via vacuum to press the heated panel P into the curved shape of the mold 110 (and in particular, the lower base of the mold 110).

In some embodiments, the mat support 114 is positioned above the heating mat 116. In some embodiments, a single mat support 114 and heating mat 116 is provided.

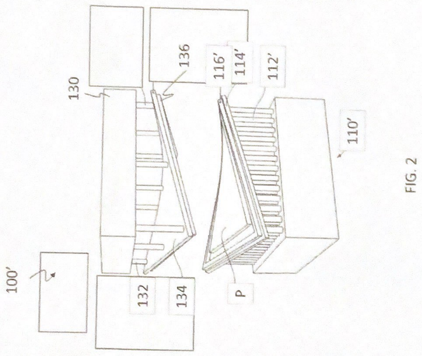

FIG. 2 shows another molding system 100'. The molding system 100' comprises a mold 110' and a conformable stamp 130. The mold 110' may be similar in configuration to the mold 110 of FIG. 1.

The mold 100' and the conformable stamp 130 are opposed to each other. The mold 100' and the conformable stamp 130 are configured to contact the heated panel P on opposite sides thereof.

The conformable stamp 130 comprises an array of rods 132. Each of the rods 132 in the array of rods is configured to be slidably changeable in length. In certain configurations, each of the rods 132 in the array of rods is configured to be selectively freely slidable in length.

A second flexible mat support 134 is in contact with the array of rods 132. The second flexible mat support 134 is in contact with a lower (or free) end of each of the rods 132. In certain configurations, the second flexible mat support 134 is maintained in contact with the array of rods 132 in the same way as the flexible mat support 114' is maintained in contact with the array of actuation members 112'. Specifically, the second flexible mat support 134 is selectively retained in contact with the array of rods 132 via vacuum. The three-dimensional shape of the second flexible mat support 134 corresponds to the arrangement of the array of rods 132. The lengths of each of the rods 132 defines the shape of the second flexible mat support 134 placed thereunder.

In the configuration shown in FIG. 2, the conformable stamp 130 is configured to press against the heated panel P and take on the shape defined by the flexible mat support 114' and the array of actuation members 112'. The array of rods 132 are configured to be selectively fixed in length relative to an upper base when resistance is met as provided by the flexible mat support 114' and the array of actuation members 112'. In this way, both the mold 110' and the conformable stamp 130 may apply pressure on opposite sides of the heated panel P such that the heated panel reliably takes a shape which corresponds to the three-dimensional arrangement of the flexible mat support 114' / the array of actuation members 112'.

In the configuration shown in FIG. 2, both mold 110' and conformable stamp 130 have heating mats 116', 136, respectively. The heating mats 116', 136 may be the same configuration as the heating mat 116 of FIG. 1. Specifically, as detailed below, the heating mats 116', 136 each have heating elements which assist in heating the stock material / heated panel P.

In some embodiments, the flexible mat support 114' and the second flexible mat support 134 may be combined into a single flexible mat support. In some embodiments, the heating mats 116' 136 may be combined into a single heating mat.

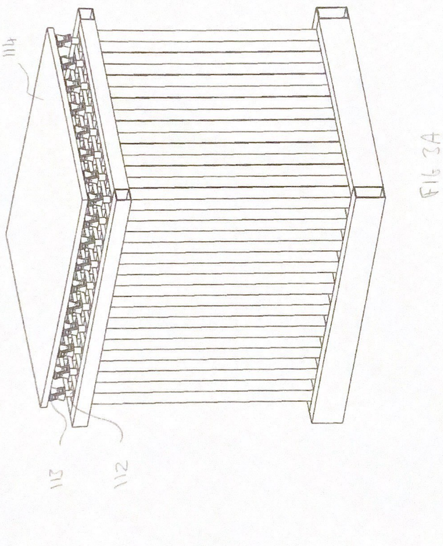

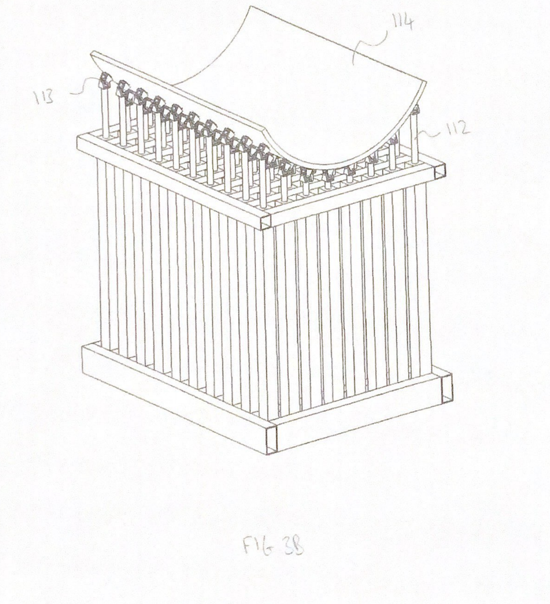

With reference to FIGS. 3A and 3B, part of the mold 110 of FIG. 1 or FIG. 2 is shown (other parts are omitted for ease of reference). In particular, the array of actuation members 112 and the flexible mat support 114 are shown in two configurations. In FIG. 3A, part of the mold 110 is shown with the array of actuation members 112 in a flat configuration with respect to the moldable material. In the flat configuration, each of the array of actuation members 112 has a length which is generally the same. In FIG. 3B, part of the mold 110 is shown with the array of actuation members 112 in a three-dimensional molding configuration. In the three-dimensional molding configuration, the lengths of each of the array of actuation members 112 may be non-uniform to define a three-dimensional shape. The mold 110 may be transitioned between the flat configuration and the three-dimensional molding configuration by actuation of the array of actuation members 112 to change the lengths of each of the actuation members 112. The curved shape may be defined by a digital design file that is translated into height of actuation members 112 by a control system (not shown).

As noted above, the flexible mat support 114 is maintained in contact with the array of actuation members 112 via vacuum action, although embodiments without vacuum are envisaged. For example, the flexible mat support 114 is maintained in contact with the array of actuation members 112 during transition between the flat configuration and the three-dimensional molding configuration via vacuum action. The vacuum action acts between each of the actuation members 112 and the flexible mat support 114 resulting in the three-dimensional shape of the flexible mat support 114 conforming to the three-dimensional shape of the array of actuation members 112. The flexible mat support 114 may be maintained in contact with the array of actuation members 112 during the entire molding process of the heated panel P.

As shown in FIGS 3A and 3B, each of the actuation members 112 comprises a suction head 113. Each of the suction heads 113 is configured to connect to the flexible mat 114 support by vacuum.

As noted above, FIGS. 3A and 3B show parts of the mold 110. However, the same arrangements/configurations may be used for the mold 110' and the conformable stamp 130. For example, suction heads (configured in the same way as shown in FIGS. 3A and 3B) may also be used to connect the array of rods 132 of FIG. 2 with the corresponding flexible mat support 114'.

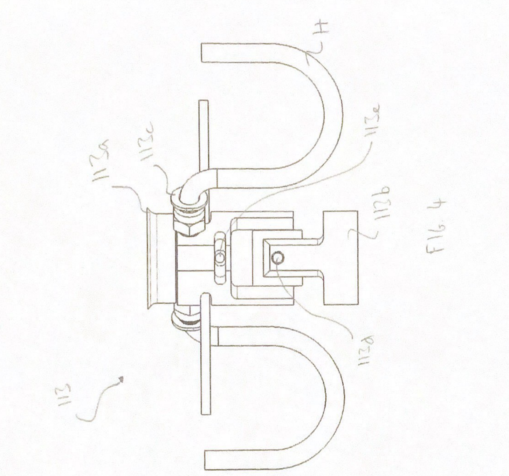

Referring to FIG. 4, an example of a suction head 113 is provided. In the arrangement shown in FIG. 4, the suction head 113 takes the form of a suction cup 113a. The suction cup 113a is configured to grip onto the flexible mat support 114 when a vacuum is created in a hollow interior (not shown) of the suction cup 113a. The suction cup 113a is configured to provide a vacuum seal between itself and the flexible mat support 114. The suction cup 113a may be made from flexible materials like silicone or rubber.

In certain configurations, the suction cups 113a comprise a central cup area and an outer skirt extending about the central cup area. The central cup area may be made of a harder material than the outer skirt.

The hollow interior of the suction cup 113a is connected to a vacuum network. The vacuum network is configured to create a vacuum (or near-vacuum) in the hollow interior of each of the suction cups 113a. For example, the vacuum network may comprise a number of vacuum hoses H connected to each suction cup 113a via vacuum connectors 113c. The vacuum network may comprise a vacuum pump (not shown) which is configured to remove air from the vacuum network (in particular, remove air from each of the vacuum hoses H and suction cups 113a). In this manner, the vacuum network may apply a vacuum (or near-vacuum) to the suction cups 113a such that the suction cups 113a grip onto the flexible mat support 114.

The vacuum network is configured to selectively apply a vacuum in the suction cups 113a such that the suction cups 113a selectively grip the flexible mat support 114. For example, the vacuum network may be configured to allow air to re-enter the vacuum network (in particular, each of the vacuum hoses H and suction cups 113a) such that the gripping force applied to the flexible mat support 114 from the suction cups 113a is removed, thereby releasing the flexible mat support 114 from the suction cups 113a.

In certain arrangements, the vacuum network is configured such that the gripping force of the vacuum action of the suction cups 113a on the flexible mat support 114 may be varied. For example, the gripping force may be varied continuously from zero to a maximum gripping force. In other configurations, the gripping force may be varied with at least three different levels of gripping force.

The suction cups 113a and the flexible mat 114 are made of materials to allow relative lateral sliding even when vacuum suction is being applied. It has been found that when a curved shape is applied to the flexible mat (to mold a curved shape) by actuation of the actuation members 112, a non-slidable connection between the flexible mat 114 and the suction cup 113a can create wrinkles or otherwise distort the desired curved shape. This relative sliding is enabled, at least in part, by a low friction surface for the flexible mat such as by the flexible mat 114 being made of, or to comprise at the interface with the suction cups 113a, silicone or PTFE.

As noted above, the vacuum connectors 113c allow vacuum hoses H to be connected to the interior of the suction cups 113a. Specifically, the vacuum connectors 113c may be configured to connect to corresponding vacuum hose connectors (not shown) in an airtight manner.

As shown in FIG. 4, the vacuum connectors 113c are configured such that the vacuum hoses H are connected/inserted perpendicularly to the direction of movement of the corresponding actuation member 112.

The vacuum hoses H are flexible. The flexible hoses H may be made from any flexible material, such as flexible materials like silicone or rubber. This allows for the free movement/actuation of the actuation members 112.

The suction heads 113 further comprise a base 113b connected to the respective actuation members 112. The base 113b may be fixedly connected to the respective actuation member 112 such that relative movement of the base 113b and the respective actuation member 112 is prevented.

Each of the suction heads 113 are configured to be pivotable relative to the respective actuation member 112. Specifically, each of the suction heads 113 comprise a pivotable joint. The pivotable joint may be disposed between the base 113b and the suction cup 113a. Accordingly, the suction cup 113a may articulate/pivot relative to the base 113b (and the respective actuation member 112). In this manner, the suction cups 113a may define a three-dimensional shape which corresponds to the three-dimensional shape of the object to be molded. In the example embodiment of FIG. 4, the suction heads 113 have first and second pivot axes 113d, 113e that are perpendicular relative to one another to allow the suction heads 113 to pivot about the first and second pivot axes 113d, 113e relative to the actuation members 112. As such, the suction heads 113 can change angle relative to the flexible mat 114. Other pivotable mounts between the suction heads 113 and the respective actuation member 112 are possible such as gimbal mounts.

In some embodiments, in addition to the two axis pivoting described above, the suction heads 113 are rotatable about a longitudinal axis of the actuation members 112. For example, the base 113b is rotationally connected to the rods of the actuation members 112.

The pivotable joints may comprise a lower joint that is rotatable relative to the actuation member and an upper joint that is connected to the lower joint about a pivot axis. The pivotable joints may provide at least two degrees of freedom.

The suction cups 113a and the flexible mat support 114 may be configured to allow slip therebetween. For example, the suction cups 113a and the flexible mat support 114 may be configured to allow limited slip therebetween. The flexible mat support 114 may be smooth. For example, the flexible mat support 114 may be smooth so as to allow for slip between the suction cups 113a and the flexible mat support 114.

In contrast to magnetic attachment of actuation members with mat supports, as the suction cups 113a and the flexible mat support 114 are not rigidly fixed to each other (i.e. there is a limited amount of slip due to the vacuum action), the flexible mat support 114 may be arranged in more intricate three-dimensional shapes without causing unforeseen shapes in the flexible mat support 114. For example, due to the limited slip, wrinkles in the flexible mat support 114 may be reduced.

In certain configurations, the suction cups 113a comprise a lip/skirt which is configured to curl downwardly in a flatter configuration upon vacuum connection to the flexible mat support 114. This may assist in further sliding of the suction cups 113a relative to the flexible mat support 114.

In certain configurations, the flexibility of the suction cups 113a allow for a further improved shaping of the flexible mat support 114 as there is give between the position of the actuation members 114 and the flexible mat support 114.

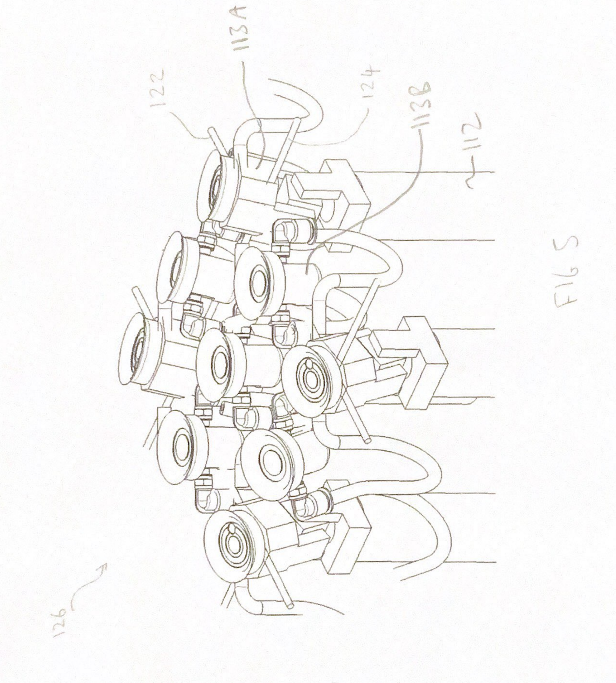

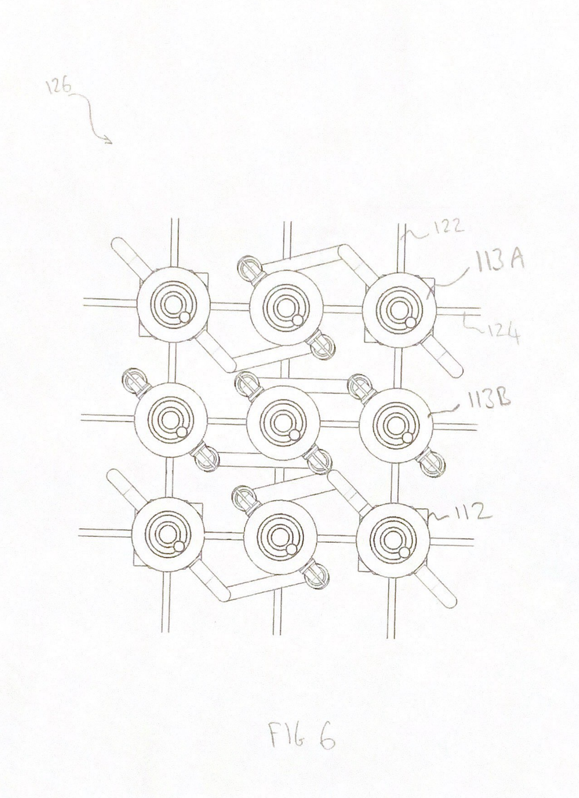

Referring to FIGS. 5 and 6, an array 126 of suction heads 113 is illustrated in one exemplary embodiment. The array 126 of suction heads 113 includes first and second control rods 122, 124 that are arranged in a grid to connect adjacent suction heads 113 to one another. That is, a plurality of first control rods 122 and a plurality of second control rods 124 are arranged perpendicular to one another. Each of the first control rods 122 extend through a respective row of suction heads 113 and each of the second control rods 124 extend through a respective column of suction heads 113. The first control rods 122 and the second control rods 124 are vertically offset relative to each other (relative to a direction of extension/retraction of the actuation members 112). In this way, pivoting of the suction heads 113 is stiffened relative to neighboring suction heads 113 to ensure that the three-dimensional curved shape is formed in a smooth way.

Continuing to refer to FIGS. 5 and 6, first and second types of suction heads 113A, 113B are provided. A first type of suction head 113A is pivotally mounted to the actuation members 112 whereas the second type of suction head 113B is freely disposed between actuation members 113B (i.e. is not mounted to a respective actuation member 112). The second type of suction head 113B floats between neighboring suction heads 113A of the first type. In the example embodiment, every other suction head 113A along any given row or column is of the first type with one suction head 113B of the second type disposed between adjacent suction heads 113A of the first type. In some embodiments, suction heads 113B of the second type may be provide for every n suction heads 113A of the first type where n is an integer of 2 or greater. The suction heads of the first and second types 113A, 113B are connected to the vacuum network to apply negative pressure to the flexible mat support 114. Further, the first and second connecting rods are slidably connected to (e.g. by passing through holes in) part of the suction heads 113A, 113B of both the first and second types to ensure that the suction heads 113A, 113B act in tandem in defining the 3D curved shape of the flexible mat support 114. The floating suction heads 113B of the second type ensure sufficient contact with the flexible mat support 114 without requiring addition actuation members 112.

Referring to FIGS. 3A and 3B , there is shown the flexible mat support 114 with actuation members 112 connected thereto. To assist with management of the vacuum hoses H, especially during actuation of the array of actuation members 112, the type of vacuum connectors 113c, 113c' may be varied between actuation members 112. The types of suction heads vary between suction heads 113

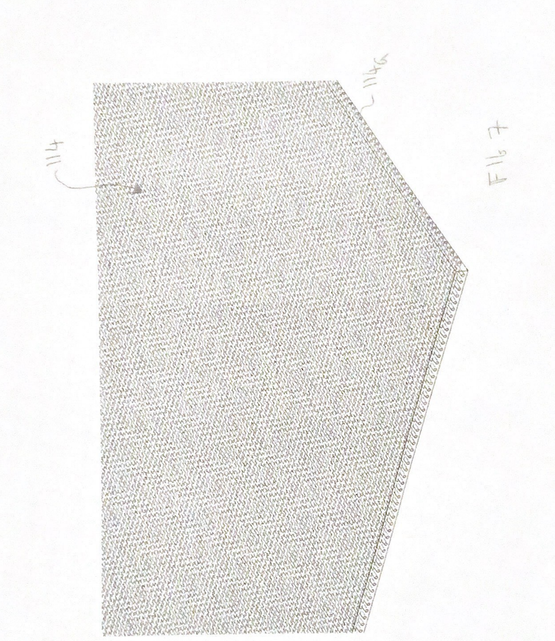

FIG. 7 shows an example flexible mat support 114. As noted above, flexible mat support 114 is configured to be gripped by suction heads 113 of the actuating members 112. The surface of the flexible mat support 114 is smooth to allow slip between the suction heads 113 and the flexible mat support 114.

As can be seen in FIG. 7, the flexible mat support 114 comprises wires 114a, tubes or solid rods disposed therein. The wires, tubes or solid rods may be configured to provide strength to the flexible mat support 114. The wires, tubes or solid rods 114a may take the form of a mesh or grid. In embodiments, the wires, tubes or solid rods 114a are slidably disposed in a grid of lumens within a thickness of the mat to ensure requisite stiffening and flexibility of the flexible mat support 114. In embodiments, rows and columns are respectively provided at different levels relative to the thickness of the flexible mat support 114.

In some embodiments, the flexible mat support 114 comprises a membrane of a rubber or silicone flexible material. The rods 114a may be carbon or steel or glass fiber rods or tubes embedded in the membrane. The steel may be stainless-steel or spring steel. The rods 114a may be in a range from 0.5mm to 25 mm in diameter. The rods 114a are used for stiffening the membrane while allowing it to expand and contract in a range of 1-50%.

The flexible mat supports 114', 134 may be similar in arrangement and configuration to flexible mat support 114 shown in FIG. 7.

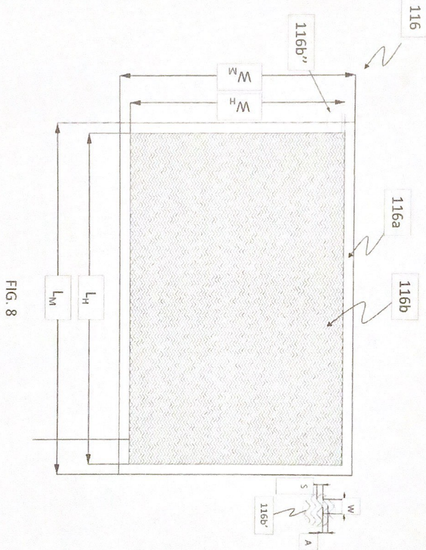

FIG. 8 shows an example of a heating mat 116 in plan view. The heating mat is generally planar. In the example shown in FIG. 8, the heating mat 116 is rectangular with a long side (extending horizontally in FIG. 8) and a short side (extending vertically in FIG. 8).

The heating mat 116 may comprise a substrate material. The substrate material may define the shape of the heating mat 116. The substrate material may be silicone. An outer border region 116a is defined in the substrate material. A heating area 116b is defined in the substate material. The outer border region 116a surrounds the heating area 116b. The heating area 116b may not extend to an outer peripheral edge of the substrate material of the heating mat 116.

As seen in FIG. 8, the heating area 116b is generally arranged as a rectangle. The heating area 116b comprises heating elements 116b' provided therein. The heating elements 116b' may be resistive wires configured to produce heat when current is passed through them. The heating elements 116b' may be embedded in the substrate material. The heating elements may be in the form of a pattern of sinusoidally extending heating elements 116b'. The pattern of sinusoidally extending heating elements 116b' may extend in the plane of the heating mat 116 / substrate material.

The sinusoidally extending heating elements 116b' may extend along the length of the heating mat 116 (e.g. along the longer side of the rectangle of the heating mat 116). The respective sinusoidally extending heating elements 116b' may be spaced apart along the width of the heating mat 116 (e.g. along the shorter side of the rectangle of the heating mat 116). The pattern of sinusoidally extending heating elements 116b' extend along a long side direction of the rectangle of the heating area 116b and adjacent sinusoidally extending heating elements 116b' are spaced along short side direction of the rectangle of the heating area 116b. As shown in FIG. 8, the sinusoidally extending heating elements 116b' extend generally parallel to each other (i.e. each sinusoidally extending heating element 116b' extends along adjacent parallel lines).

The heating elements 116b' may comprise terminations 116b" which are configured to be connected to a power supply (not shown). The power supply is configured to pass current through the heating elements 116b' thereby heating the heating area 116b of the heating mat 116. The terminations 116b" of the heating elements 116b' are provided on a shorter side of the heating mat 116 (e.g. on a shorter side of the rectangle of the heating mat 116 / heating area 116b).

Adjacent sinusoidally extending heating elements 116b' are spaced apart by a distance S. The distance may be between 1 mm and 100 mm, preferably 5 mm and 50 mm and preferably 5 mm to 20 mm.

Each sinusoidally extending heating element 116b' may have a wavelength W and an amplitude A. The wavelength W may be between 10 mm and 50 mm, preferably between 20 mm and 40 mm. The amplitude A may be between 1 mm and 20 mm, preferably between 5 mm and 15 mm.

The use of sinusoidally extending heating elements 116b' may allow for even heating of the heated panel P whilst allowing for flexibility in the heating elements 116b' such that they are less prone to breaking due to flexing under heat and under the three-dimensional shape induced by the actuation members 112.

In certain configurations, all sinusoidally extending heating elements 116b' of the heating mat 116 are provided on a single electric circuit.

As shown in FIG. 8, the heating area 116b is generally rectangular with length L_{H} and width W_{H}. The length L_{H} may be at least 1 m. The width W_{H} may be at least 0.5 m.

The border region 116a surrounds the heating area 116b by at least 50 mm. The outer peripheral edge of the border region 116a defines the size of the heating mat 116. Specifically, the heating mat is generally rectangular with a length L_{M} and width W_{M}. Accordingly, L_{M} - L_{H} is at least 50 mm, and W_{M} - W_{H} is at least 50 mm.

In some embodiments, the heating mat 116 is imbued with heat conducting fillers in powdered form in order to promote even heat distribution. Exemplary fillers include Aluminum Oxide (Al₂O₃), Silver (Ag), Copper (Cu), Carbon Nanotubes (CNTs), Silicon Carbide (SiC), Aluminum Nitride (AlN), Zinc Oxide (ZnO), Diamond, Boron Nitride (BN), Hexagonal Boron Nitride (h-BN), Graphene, Metal Oxides (e.g., Magnesium Oxide, MgO), Alumina (Aluminum Oxide, Al₂O₃). Fillers can be added in a mix between 1-40% volume of filler to silicone, wherein the heating mat 116 is predominantly formed of silicone.

The heating mats 116', 136 may be similar in arrangement and configuration to heating mat shown in FIG. 8.

A method of molding is also described. The method may use any of the molding systems described herein. The method comprises supporting the supporting molding material P on the flexible mat support 114. Thereafter, the flexible mat support 114 is connected via vacuum action to the suction heads 113 of the actuation members 112. Thereafter, the actuation members 112 may be individually adjusted in length by a control system (not shown) to define a curvature of the flexible mat support 114. The vacuum action may be applied by the vacuum network described above.

A control system (not shown) may be used to control the operation of the array of actuatable members 112. The control system receives a 3D digital design file for the object to be molded. The control system provides processing capability to determine the required lengths of the individual actuatable members 112 such that they define a three-dimensional curved shape of the object to be molded. The control system includes at least one processor and a memory in the form of computer readable storage device or media. The processor can be any custom made or commercially available processor, a central processing unit (CPU), a graphics processing unit (GPU), an auxiliary processor among several processors associated with the control system, a semiconductor based microprocessor (in the form of a microchip or chip set), a macroprocessor, any combination thereof, or generally any device for executing instructions. The computer readable storage device or media may include volatile and nonvolatile storage in read-only memory (ROM), random-access memory (RAM), and keep-alive memory (KAM), for example. KAM is a persistent or non-volatile memory that may be used to store various operating variables while the processor is powered down. The computer-readable storage device or media may be implemented using any of a number of known memory devices such as PROMs (programmable read-only memory), EPROMs (electrically PROM), EEPROMs (electrically erasable PROM), flash memory, or any other electric, magnetic, optical, or combination memory devices capable of storing data, some of which represent executable instructions, used by the control system in controlling the process and system for manufacturing the object. The control system may be cloud based, local or a combination of both.

In further embodiments, the molding system is particularly suited for forming polymeric and resin-based composite materials under heat and vacuum. The flexible mat support may itself serve as both a formable base and a heat source, thereby enabling thermoforming and composite curing directly on a reconfigurable mold surface. This integration allows the molding of thermoplastic sheets and thermoset composite laminates without separate tooling for each part geometry.

In certain embodiments, the flexible mat support comprises a stretchable heating membrane in which resistive heating elements are embedded within a silicone or elastomeric substrate. The heating elements may extend in a sinusoidal or otherwise nonlinear pattern within the plane of the membrane to accommodate elastic deformation of the membrane during reconfiguration without conductor breakage or print-through on molded parts. The wavelength and amplitude of the sinusoidal geometry may be selected according to the strain of the membrane; for example, the heating elements may have a wavelength of between 10 mm and 80 mm, and an amplitude of between 5 mm and 55 mm. The spacing between adjacent heating lines may be 5 mm to 50 mm, and electrical terminations may be located on a shorter side of a generally rectangular heating area. Power densities of about 2-10 kW/m² may be achieved, allowing heat-up of the active surface to 180-200 °C within ten minutes. Temperature uniformity across the active area may be within ±5 °C, optionally aided by thermally conductive fillers such as aluminum oxide, boron nitride, carbon nanotubes, or graphene dispersed within the silicone substrate.

The suction heads and vacuum paths may be formed of high-temperature-resistant materials configured to operate at temperatures up to at least 200 °C without permanent deformation or loss of vacuum seal. Suitable materials include high-temperature silicone, PTFE-reinforced polymers, PEEK components, or metallic cup bodies (e.g., aluminum or stainless steel) provided with thermal isolation features. Each suction head may include a lip or skirt of mushroom-shaped profile to retain sealing under partial slip, and may employ a dual-durometer construction having a firmer core and a softer skirt. The vacuum level may be maintained between -0.6 bar and -0.9 bar while still permitting controlled micro-sliding of the suction heads relative to the flexible mat support.

To facilitate such sliding motion under combined heat, pressure, and vacuum, a low-friction, stretchable coating may be provided at the interface between the suction heads and the flexible mat support. The coating may be applied to either or both contacting surfaces and may comprise a fluorinated elastomeric material, PFA-filled silicone, or ceramic-filled elastomeric composition, such as one containing hexagonal boron nitride. The coating provides a coefficient of friction below 0.3 at 200 °C and maintains adhesion and flexibility under cyclic strains of at least 10 %. The use of such coating prevents rubber-on-rubber sticking, allowing the membrane to undergo both single and double curvature deformation without wrinkling or surface marking of the molded part.

Through the combination of (i) the stretchable embedded heating layer, (ii) the high-temperature vacuum hardware, and (iii) the low-friction interface coating, the molding system enables in-situ heating and forming of polymeric or resin-based composite materials over complex three-dimensional geometries. The system thereby achieves uniform heating, stable vacuum sealing, and smooth molded surfaces (surface roughness Ra ≤ 1.0 µm) without conductor print-through or localized distortion. Example curvatures achievable include single curvature radii from approximately 50 mm to *50* 000 mm and double curvature surfaces having principal radii of opposite sign within the same range, while maintaining membrane strain within about 10-15 %.

In other examples, the suction heads are engineered to optimize vacuum sealing while permitting controlled relative movement between the suction heads and the flexible mat support, even under elevated temperatures and applied loads. Each suction head features a concave central cavity that forms the primary vacuum chamber, transitioning smoothly into a peripheral interface region, and terminating in a downwardly curving lip or skirt. This structural profile approximates a mushroom-like geometry with a concave cap: the concave cavity enhances initial suction engagement by conforming to the mat surface under negative pressure; the intermediate interface region provides a broad, stable contact area that distributes forces and facilitates low-friction sliding; and the downward curve of the skirt acts as a flexible seal retainer, curling inward upon vacuum application to resist detachment during micro-movements or thermal-induced expansions. This design mitigates vacuum loss in dynamic conditions, such as during mat reconfiguration or thermal cycling, and supports Gaussian (double) curvature formation without inducing wrinkles or localized distortions in the mat.

The materials and interface of the suction heads further enable sliding functionality. The contact surface of the suction heads, or the opposing surface of the flexible mat support, incorporates materials selected for their thermal stability and low-friction properties, such as PTFE-infused silicone or fluoropolymer composites. These materials allow for a controlled degree of lateral slip-typically on the order of 1-10 mm per head-while maintaining vacuum integrity. This sliding capability is critical for accommodating differential strains in the flexible mat support during shaping, preventing the formation of unintended folds or tensions that could compromise mold surface quality.

The vacuum-based attachment system of the present disclosure offers significant advantages over prior art systems that rely on magnetic connections between actuation members and mat supports. Magnetic attachments often result in overly rigid fixation, which can lead to mat wrinkling or uneven shaping in complex geometries, and are prone to degradation of magnetic strength at temperatures above 100-150 °C due to Curie point effects or thermal demagnetization. In contrast, the vacuum system provides tunable grip force that remains effective up to at least 200 °C without permanent degradation, ensuring reliable attachment during heating cycles for thermoforming or composite curing. Moreover, vacuum allows for easier release and reconfiguration of the mat, reducing setup times and enabling rapid prototyping of low-volume parts.

The molding system is specifically tailored for processing polymeric materials and resin-based composites, which exhibit fundamentally different thermal and mechanical behaviors compared to metallic materials in prior art forming systems. Polymers (e.g., thermoplastics such as polypropylene, PETG, or PMMA) and resin-based composites (e.g., thermosets like epoxy or polyester reinforced with glass or carbon fibers) typically require molding temperatures in the range of 100 °C to 250 °C to achieve malleability or cure initiation, far below the 500-1500 °C regimes common in metallurgical applications like sheet metal forming or forging. Consequently, the system's components, including the flexible mat support, suction heads, and vacuum network, are constructed from high-temperature elastomers, polymers, and composites that withstand these moderate temperatures without melting or excessive creep, while avoiding the need for expensive refractory materials. This optimization enables cost-effective operation, with surface precision suitable for polymeric parts-where tolerances of ±0.5-1.0 mm and surface roughness Ra ≤ 1.0 µm are often sufficient-rather than the sub-micron accuracies demanded in metal forming.

Additional structural features may enhance the system's performance in achieving smooth, wrinkle-free curvatures. For instance, the array of suction heads may be interconnected by a grid of rods or bars arranged in perpendicular rows and columns, with the rods passing through or attaching to adjacent heads at vertically offset positions. This interconnection stiffens the array against excessive pivoting, promoting uniform deformation of the flexible mat support and ensuring that the defined curvature is translated accurately to the molded part. Similarly, the flexible mat support may incorporate embedded stiffening elements, such as a mesh of carbon fiber, stainless steel, or glass fiber rods or tubes (diameter 0.5-25 mm) within the silicone substrate, providing resistance to excessive sagging while allowing 1-50% elastic expansion and contraction to accommodate the actuation members' movements.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the disclosure in any way. Rather, the foregoing detailed description will provide those skilled in the art with a convenient road map for implementing the exemplary embodiment or exemplary embodiments. It should be understood that various changes can be made in the function and arrangement of elements without departing from the scope of the disclosure as set forth in the appended claims and the legal equivalents thereof.

## Claims

1. A molding system for molding a three-dimensional object from a polymeric or resin-based composite material

2. , comprising:
an array of actuation members;
suction heads provided on the actuation members of the array of actuation members;
a flexible mat support on the suction heads of the array of actuation members,
wherein the suction heads are configured to connect to the flexible mat support by vacuum, and wherein the actuation members are individually length adjustable to define a curvature of the flexible mat support to provide a curved base for molding a three-dimensional object.

3. The molding system of claim 1, comprising pivotable joints between the suction heads and the actuation members, optionally wherein the pivotable joints comprise a lower joint that is rotatable relative to the actuation member and an upper joint that is connected to the lower joint about a pivot axis.

4. The mold system of claim 1, comprising pivotable joints between the suction heads and the actuation members, wherein the pivotable joints allow two perpendicular pivoting axes relative to the flexible mat and optionally rolling around a longitudinal axis extending through the respective actuation member.

5. The molding system of claim 1, wherein the suction heads are in the form of suction cups.

6. The molding system of claim 4, wherein the suction cups comprise a central cup area and an outer skirt extending about the central cup area, wherein the central cup area is made of a harder material than the outer skirt.

7. The molding system of claim 1, comprising a vacuum network to connect the suction heads to the flexible mat by vacuum, and, optionally, wherein the vacuum network comprises flexible vacuum hoses and vacuum connectors for connecting the flexible vacuum hoses to the suction heads, and, further optionally, wherein first and second types of the vacuum connectors are provided that extend from the suction heads in different directions to provide for different connection angles for the flexible vacuum hoses.

8. The molding system of claim 1, wherein the suction heads are configured to be slidable relative to the flexible mat support when connected thereto.

9. The molding system of claim 1, wherein the flexible mat includes a grid of stiffening rods embedded in a substrate.

10. The molding system of claim 8, wherein the substrate is made of silicone.

11. The molding system of claim 1, wherein the suction heads are connected to each other by a grid of rods.

12. The molding system of claim 1, comprising a heating mat supported on the flexible mat support for heating material to be molded to form the three dimensional object.

13. The molding system of claim 8, wherein the heating mat comprises a pattern of sinusoidally extending heating elements, optionally wherein a heating area of the mat is arranged in a rectangle.

14. The molding system of claim 1, wherein there are suction heads of a first type connected to respective actuation members and suctions head of a second type disposed between neighboring actuation members.

15. The molding system of claim 1, wherein the flexible mat support includes a grid of lumens disposed therein for slidably receiving respective control rods.

16. A method of molding a three-dimensional object from a polymeric or resin-based composite material comprising:
providing the molding system of any preceding claim;
supporting molding material on the flexible mat;
vacuum connecting the flexible mat to the suction heads;
individually adjusting lengths of the actuation members by a control system to define a curvature of the flexible mat; and
molding the molding material to assume the curvature defined by the flexible mat.
